# EUROPEAN PATENT APPLICATION

(11) **EP 4 703 700 A1**
(43) Date of publication of application: **04.03.2026**
(21) Application number: 24382930.6
(22) Date of filing: 29.08.2024
(51) Int. Cl.: G01M 3/00, G01M 3/38

(54) **A HTF LEAK DETECTOR DEVICE AND METHOD FOR DETECTING HTF LEAKS IN A SOLAR THERMAL INSTALLATION**

(71) Applicant: Fundación Cener, 31621 Sarriguren, Navarra (ES)
(72) Inventor: PEÑA LAPUENTE, Adrián, E-31621 Sarigurren, Navarra (ES); SORBET PRESENTACIÓN, Francisco Javier, E-31621 Sarigurren, Navarra (ES); SÁNCHEZ GONZÁLEZ, Marcelino, E-31621 Sarigurren, Navarra (ES); IZQUIERDO NÚÑEZ, David, E-50009 Zaragoza (ES); PELAYO GIL, Cristina, E-50009 Zaragoza (ES); BLASCO HERRANZ, María Pilar, E-50009 Zaragoza (ES)
(74) Representative: ABG Intellectual Property Law, S.L.

(57) **Abstract**

The present disclosure relates to the field of solar thermal installations and Thermal Transfer Fluid (HTF) leak detectors. Specifically, to an HTF leak detector for an early detection of an HTF leak. This HTF leak detector is installed in a thermally insulated component of a solar thermal installation, which is in communication with a central system to allow monitoring of the occurrence of leaks in various areas, mainly at critical points such as welds, moving parts and fixed joints.

## Description

### TECHNICAL FIELD OF THE DISCLOSURE

The present disclosure belongs to the field of solar thermal installations and to Heat Transfer Fluid (HTF) leak detectors, specifically to the monitoring of the occurrence of leaks in different areas, mainly at critical points such as welds, moving parts and fixed joints.

### BACKGROUND OF THE DISCLOSURE

Concentrated Solar Power plants, also known as CSP, require the use of a specific heat transfer fluid (HTF) that is designed to work to the correct temperature for prolonged periods in solar thermal power applications.

Concentrated Solar Power (CSP) plants use reflectors to concentrate sunlight onto a receiver containing heat transfer fluid, which is heated and used to convert water to steam. The steam turns turbines, leading to electricity generation. The heat transfer fluid can also be used to store energy from the sunlight, allowing consistent power provision despite the intermittent supply of sunlight. In some cases, the water converted into steam could be used as a heat transfer fluid.

However, these CSP plants can suffer from heat transfer fluid leaks, mainly in critical points like welds, moving parts and fixed joints of the installation.

Among CSP Technologies, in the specific case of parabolic trough Technology, the HTF is a synthetic product classified as an environmentally harmful substance. Any spillage has to be quickly controlled and collected, as it is very harmful to aquatic life if it reaches aquifers.

It is a flammable product, so there is a high risk of ignition of when a leak occurs since the leak occurs in high temperature areas. Then, the economic damage can be very significant as the leakage results in expensive actions to be undertaken (shutdown of entire loops, excavations, toxic waste management, etc.) and replacement of damaged plant components (pipes, gaskets, receivers, insulation, etc.). In addition, the maintenance tasks of such actions involve the shutdown of some plant loops, even complete plants if the leak occurs at the beginning or at the end of a loop and then, the distribution piping is affected, which directly affects the efficiency of the rest of the plant in the event of a partial shutdown of the field, and ultimately the economic profitability of the plant.

Additionally, the occurrence of a HTF leak poses an enormous danger to the health of all citizens, as the HTF used in concentrated solar power plants releases benzene when it decomposes in the free atmosphere. This means that in the event of a noticeable leak, plant workers have to be evacuated and those in charge of neutralizing the leak and cleaning up the puddle of the HTF have to work with special protective equipment.

Therefore, HTF losses can be very harmful economically and environmentally because of their direct effect on the plant performance among other reasons, so it is important to notice them as soon as possible to take the required preventive measures with celerity. But the problem is that it is not easy to notice these leaks because elements of the solar thermal plant like the ball joints are thermally enclosed into an insulation that protects the thermal loop against the thermal losses that these elements would produce, and the vapor produced once the high temperature HTF is at ambient pressure is colorless. Then, the leak can remain hidden for weeks until producing any external noticeable effect.

Therefore, once a leak has been detected, regardless of the stage of the leak, the ball joint has to be replaced, which leads to the shutdown of the respective loop, with the subsequent reduction in the aforementioned plant revenue. If the leak is at a late stage, and there is a risk of serious damage to the plant or the environment, the repair of the leak cannot be postponed and must be carried out urgently. However, if the leak is detected at an early stage when the risk is still low, the repair of the leak can be postponed and planned as part of the regular maintenance works carried out on the correspondent loop, while the evolution of the leak is controlled and monitored.

Then, by detecting the leak at an early stage, the number of shutdowns for loop maintenance can be reduced, reducing both plant maintenance costs and the loss of revenue that involves the partial shutdown of the plant.

Generally, as mentioned above, the major structural damages where HTF leaks occur are the critical points such as ball joints, welding points, and fixed joints, where friction or thermal expansions affect the most. However, these are points in the thermal loop that are difficult to access.

Some types of sensors are based on the detection of the pool of HTF that forms under the ball joint when the ball joint insulation is filled with liquid and overflows. This sensor is based on a material that degrades in contact with the HTF. This sensor can detect the leakage in an arm but is not able to differentiate which of the ball joints is causing the leakage. This concept gives the system the ability to remotely alarm as soon as the leak is detected, but its main drawback is that the leak is detected at a very late stage. Furthermore, the HTF spill is so heavy that it gets condensed on the insulation, posing an ignition hazard, and forming a significant puddle on the ground, posing a health and environmental hazard if it were to seep far enough into the ground or reach the storm water. Furthermore, this type of sensor is difficult to integrate at other points of the thermal loop than the spherical joint because it requires a concrete slab on which the HTF puddle is deposited.

Another type of sensor is based on detecting the gas plume escaping from the insulation of the ball joint by means of artificial vision means using an infrared camera. The main advantage of this sensor concept is that it is able to detect the leak earlier than the previous one, at an intermediate stage of the leak, so contamination of the ground of the plant terrain might be prevented. However, since it requires expensive image acquisition and processing means, the economically viable option for this type of sensor is to mount it on an unmanned ground vehicle (UGV) or aerial vehicle (UAV) and drive it around the solar field scanning the kneecaps for signs of a high-temperature gas plume, similar to the way an operator would do it.

However, the leak that can be detected could be at a stage where there may be some HTF condensed within the ball joint insulation and the process of scanning the condition of the ball joints throughout the plant is slow and does not allow for instant remote reporting of the occurrence of the leak.

Therefore, the object of the disclosure is to provide a HTF leak detector that can detect these leaks at an early stage in difficult access points in the thermal loop.

### SUMMARY OF THE DISCLOSURE

The present disclosure provides an alternative solution for the aforementioned problems, by a HTF leak detector device according to claim 1, a thermally insulated component for a solar thermal installation according to claim 8, a solar thermal installation according to claim 9 and a method for detecting HTF leaks in a solar thermal installation according to claim 10. In dependent claims, preferred embodiments of the disclosure are defined.

In a first inventive aspect, the disclosure provides a HTF leak detector device for solar thermal installations comprising:
- a guiding conduit comprising,
   - a first end, a second end and an outer surface, and
   - at least one hole configured for a gas to pass through it located on the outer surface,
- at least one modulated IR radiation source located at the first end of the guiding conduit, configured for emitting modulated IR radiation at least in one wavelength and to inject the modulated IR radiation into the guiding conduit,
- at least one receiver, comprising at least one optical sensor forming a first reception channel, the at least one optical sensor is located at the second end of the guiding conduit for receiving the modulated IR radiation emitted by the at least one modulated IR radiation source.

As said, the present disclosure relates to a HTF leak detector developed to monitor the occurrence of leaks in different areas, mainly in critical points like welds, moving parts and fixed joints. Specifically, this disclosure relates to an optical detector based on Non-Dispersive Infra-Red (NDIR) gas detection.

For that purpose, the HTF detector comprises a guiding conduit, at least one modulated IR radiation source or emitter and at least one receiver forming a first reception channel.

On one hand, the guiding conduit is intended to guide an infrared radiation from an emitter to a receiver, that is, from a first end to a second end of the guiding conduit. The guiding conduit can also be called waveguide. Moreover, the guiding conduit is also intended to receive the gas inside through at least one hole in its outer surface, so that the infrared radiation can pass through the gas, if present.

On the other hand, the emitter or source of modulated IR radiation, which is placed at the first end of the guiding conduit, emits the modulated IR radiation towards the receiver with a specific wavelength and specific wave amplitude, where, once the modulated IR radiation has passed through the guiding conduit, it is received by the receiver placed at the second end of the guiding conduit. The receiver comprises an optical sensor forming the first reception channel, where the optical sensor receives the modulated IR radiation with a wave amplitude that will depend on whether it has passed through the gas or not, so it may be the same wave amplitude emitted if there is no a gas presence or a different wave amplitude if there is a gas presence.

The working principle of this optical sensor is based on detecting the presence of a gas in a medium by sensing the transmittance of the medium at a wavelength that corresponds with one of the absorption lines of the HTF volatile components.

Advantageously, this allows the device to detect the presence of gas more sensitively than other detectors, allowing leak detection at an early stage. Moreover, as it comprises only a few components, it can be installed anywhere in the thermal loop.

For example, this system can be used in other points along the CSP plants such as welds, pipe-unions, and any other components or critical points of the plant that could be prone to HTF leakages.

The infrared gas detectors as the HTF detector device of this disclosure are based on the fact that the absorption of IR radiation in a medium, mainly near- and mid-infrared radiation, at certain wavelengths is strongly dependent on the concentration of different gases that can be in that medium when the light beam passes through it. That is, it dependent on the concentration of different gases that are introduced in the guiding conduit. The change in the light intensity received at the absorbed wavelength is measured, by a set of optical detectors and suitable electronic systems, as explained below.

In a particular embodiment, the first reception channel of the HTF leak detector device comprises at least one optical filter located before the optical sensor and being configured for filtering a predetermined wavelength of the IR radiation.

The optical filter selects the wavelength that is going to be analysed by the optical sensor, in order to decide if a leak has occurred, and send remotely the leak information to a data centre.

In addition, due to the nature of the system and the place where it operates, which is a high temperature environment where the surrounding elements emit radiation at different wavelength(s) band, a wide range of wavelengths reaches the receiver.

Then, the desired information will be in the variation of the received signal produced by the variation in the affected wavelength. This wide-range signal variation would be very low since the weight of the wavelength attenuated by the presence of the gas in the full range of IR light that would be present in the received signal would be very low.

Therefore, to improve the sensitivity of the gas detector, at least one optical filter is placed just upstream of the optical sensor in the light path so that only the desired wavelength(s) reach the optical sensor. In this case, the receiver signal would only have the information carried by the desired wavelength(s), so that the detector would have a much better sensitivity.

Furthermore, another advantage of using an optical filter is because the IR radiation sources usually radiate IR light in a wide range of wavelengths. Therefore, if a single wavelength emitter is desired, it would be necessary to place an optical filter directly in front of the IR radiation source, although this may be difficult due to the cooling system that would be required. Therefore, locating an optical filter just before the optical sensor, advantageously prevent the amount of IR light reaching the receiver from saturating the signal in the receiver electronics.

Thanks to the optical filter, the configuration of the device can be adapted to a change in the utilized HTF by only changing the optical filter to adapt the system to the adequate and corresponding absorption lines of the new HTF.

In other different embodiments, the optical filters can be replaced by a diffracting-base receiver, such as spectrophotometers or similar, that split the IR spectral in several bands.

In another embodiment, the HTF leak detection device comprises at least one hole in the outer surface of the guiding conduit, and said hole is circular or a slot.

A larger area of hole facilitates the interior environment of the guide conduit to be more similar to the exterior environment of the device.

Further, the number of holes will depend on the sensitivity required in the device. Thus, a greater number of holes facilitates also the interior environment of the guide conduit to be more similar to the exterior environment of the device..

In some different embodiments, the guiding conduit may have a plurality of holes, patterned or not, if the device configuration or CSP plants require it.

These holes can be made with a drill, with circular form, slots, or a mix of both. Circular holes are easier to make, slots are bigger holes, so the gas can enter the conduit easily, but the light can escape from the conduit easily too. So, in a preferred embodiment, the circular holes are preferred due to the simplicity to make them with just a drill.

In a particular embodiment, the HTF leak detector device comprises at least one second receiver, comprising at least an assembly of one optical filter and an optical sensor forming a second reception channel, wherein the optical filter is configured with a reference wavelength.

In this embodiment, in which at least two reception channels and at least two wavelengths are considered, the information carried in one reception channel is compared to obtain the absorption effect that the modulated IR radiation suffers along the guiding conduit at a certain wavelength, using the information carried by the other wavelength as a reference or calibration signal. Each channel can be categorized as a test channel or a reference or calibration channel, depending on the response of the radiation at their corresponding selected wavelength to the presence of the gas, the reference channel being the signal that is not affected/attenuated by the presence of gas and the test channel being the signal is affected/attenuated by the presence of gas.

In an embodiment, the HTF leak detector device comprises a demodulator configured to demodulate the modulated IR radiation and extract only the information of the modulated IR radiation at the desired wavelength that can pass through the guiding conduit from the at least one modulated IR radiation source to the at least one receiver, preferably the demodulator is a digital lock-in amplifier.

A device whose IR radiation emitted by the emitter is not modulated implies that the receiver cannot resolve what is the source of the IR radiation incident on the optical sensor, so it is impossible to determine the portion of the level of radiation that is passing through the waveguide that is part of the radiation emitted or produced by the environment at elevated temperature. Then, the sensitivity of the detector would be very low.

That is why, in this embodiment, although it could be possible to develop the detector without a modulated emitter, the embodiment count on the demodulation of the modulated IR radiation source to allow to reach a reasonable sensitivity.

In an embodiment, the HTF leak detector device comprises an electronic circuitry comprising processing and data transmission means.

The device includes in this embodiment processing or data transmission means to perform certain degree of data processing or transmit the data to be processed in a centralized system (such as a server of the solar thermal plant). The device can include any interface that allows it to warn in case of alarm, such as a buzzer, a flashlight, or any other alarm signal.

In addition, the device can integrate any kind of power source, such as batteries, photovoltaic cells, thermoelectric generators and/or a power net connection.

This allows the device to be controlled by a centralized system and to raise the alarm in sufficient time to act avoiding too much damage to the device itself and to the solar thermal plant.

In another embodiment, the HTF leak detector device further comprises a pump configured to force penetration of gas into the guiding conduit through the at least one hole of the guiding conduit.

Forced gas penetration helps increasing the concentration of gas into the guiding conduit. Thus, in this embodiment a pump can be added to the guiding conduit in order to ensure that there is a certain degree of gas presence in the guiding conduit, in order to perform the analysis in a proper and efficient manner.

In another embodiment, the HTF leak detector is in constant communication with a central system, which allows real-time monitoring of the status of the installation. In addition, this embodiment makes it possible to incorporate an alarm system or an audible display in the event of detecting an HTF leak.

In a second inventive aspect, the disclosure provides a thermally insulated component for a solar thermal installation comprising:
- a thermal insulation casing arranged around the component forming an insulation chamber between the component and the thermal insulation casing, and
- at least a HTF leak detector device according to the first inventive aspect of the invention, located inside the insulation chamber.

A thermally insulated component is any component of a thermal loop of solar thermal plants, where the HTF leak detection device is embedded under the insulation casing. This allows the detection of gases using non-dispersive IR radiation, so that the leak status is detected early throughout the perimeter of each of these critical components at the critical points of the thermal circuit.

Taking into account the insulation chamber, which is the space between the insulation casing and the pipe or thermal component in order to scan the entire volume where the gas can escape into the insulation chamber, the HTF detection device should be placed at the highest point in case of a straight guiding conduit or anywhere in case of a curved guiding conduit, since HTF gas tends to rise, floating, as it is less dense than air.

The guiding conduit of the disclosure can be placed outside the insulation or in the insulation chamber, however it is preferable that it is placed where it is closest to the thermal component and where the gas concentration is highest first, i.e. inside the insulation chamber. In this way, a much higher detector sensitivity is achieved.

The present disclosure, thanks to be able to be integrated into the space between the insulation and the pipe or thermal component, i.e. the insulation chamber, close to the place where the leak can occur, is able to detect the leak as soon as it begins to occur, that is, at an early stage. This means that the leak is in a state in which there is still an irrelevant danger of the leak damaging the solar thermal plant infrastructure, the surrounding ecosystems or harming the life and health of the plant crew or the citizens living in the surrounding area.

The embodiment in which the HTF leak detector of the first inventive aspect comprises a pump, it can be ensured that there is a certain degree of exchange between the air into the conduit and the air in the space between the insulation casing and the pipe or thermal component, in such a way that the air that is being scanned is representative of the space between the insulation casing and the pipe or thermal component.

In a third inventive aspect, the disclosure provides a solar thermal installation comprising at least one thermally insulated component according to the second aspect of the disclosure.

In a fourth inventive aspect, the disclosure provides a method for detecting HTF leaks in a solar thermal installation according the third inventive aspect, wherein the method comprises the following steps:
a) emitting modulated IR radiation at a given wavelength or range of wavelengths by the modulated IR radiation source,
b) passing the modulated IR radiation through the guiding conduit,
c) receiving the modulated IR radiation by the at least one receiver via the optical sensor, producing a test signal which wavelength correspond to the one that is affected by the presence of the gas in the guiding conduit,
d) determine that there is HTF leakage in the thermal isolation casing of the thermally insulated component, when the ratio between the test signal and a calibration or reference signal vary and exceeds a threshold level.

The first step in the method is to emit modulated IR radiation at a determined wavelength by the modulated IR radiation source that is located in the first end of the guiding conduit, and then to pass it through the interior of the guiding conduit.

The atmosphere composition inside the guiding conduit is the same as in the space of the insulation chamber, i.e. in the space between the insulation and the pipe or thermal component, thanks to the holes of the guiding conduit.

Once the modulated IR radiation passes through the guiding conduit and reaches the second end, it is received by the at least one receiver. That is, the modulated IR radiation is received by the optical sensor where the received wavelength is converted into a test signal corresponding to a wavelength affected by the presence of a gas inside the guiding conduit.

The presence and composition of the gas present inside the guiding conduit determines how much the radiation travelling inside the guiding conduit is attenuated at each selected wavelength.

The received wavelength becomes an electrical signal in the receiver, so that the information obtained from the signal or the proper signal is sent to a central system to collect data or raise an alarm, if necessary.

After analysing the received test signal, it is determined if there is a HTF leak in the thermal insulation casing of the thermally insulated component. To achieve this, when the ratio between the test signal and a calibration or reference signal varies and exceeds a threshold level, it is determined that there is a leak, otherwise, there is no leak.

In a particular embodiment, before starting the method for detecting HTF leaks in a solar thermal installation, the HTF leak detector device must be configured and a calibration or reference signal generated, in order to later compare the calibration or reference signal with the received test signal.

By using a reference or calibration signal or channel, the features present in the signal that are not related to the presence of the gas, such as the variation of the baseline due to temperature oscillations or variations in the radiation emission of the IR radiation source, can be eliminated or at least detected, avoiding the appearance of false positives or false negatives, thus improving the performance of the detector.

In an embodiment, a reference channel is preferred over taking an initial calibration or reference signal because the reference channel can take into account the changes that can appear on the system and in the environment over the time, i.e. temperature variations on the thermal piping and joints due to different states of the plant operation, long-term degradation of electronic components, etc...

In this embodiment, the method to obtain the reference signal comprises the following steps:
i) emitting modulated IR radiation at a given wavelength or range of wavelengths by the modulated IR radiation source,
ii) passing the modulated IR radiation through the guiding conduit,
iii) receiving the modulated IR radiation by the at least one receiver via the optical sensor, producing a reference signal which wavelength correspond to the one that is not affected by the presence of the gas in the guiding conduit,
iv) storing the reference or calibration signal

The first two steps of the configuration and calibration method are the same as those of the HTF leak detection method, i.e. emitting a modulated IR radiation and passing it through the guiding conduit.

The modulated IR radiation received by the at least one receiver is received via the optical sensor, producing the calibration or reference signal whose wavelength corresponds to that which is not affected by the presence of the gas in the guiding conduit.

Finally, this calibration or reference signal is stored for later comparisons in the last step of the method for detecting HTF leaks in a solar thermal installation.

In an embodiment, in steps c) and iii) the modulated IR radiation received by the at least one receiver is received by the optical sensor, via optical filters.

These optical filters allow the reduction of the received noise or undesired signal, allowing only the desired wavelength reaches the optical sensor. Then, the signal from each receiver would only have the information carried by the desired wavelength, so that the detector would have a much better sensitivity.

In other embodiment, in step c) and step iii) the received modulated IR radiation is demodulated by the demodulator to extract only the information of the modulated IR radiation at the desired wavelength.

After signal conditioning of these signals, they are digitized and then, using a demodulator, preferably a lock-in amplifier, the level of radiation reaching the optical sensor at the modulation carrier frequency is obtained, eliminating the contribution of background radiation present in the signal that reaches the second end of the guiding conduit where the receiver is located. Thus, only the information of the IR radiation at the desired wavelength that has gone the whole optical path from the emitter to the receiver end is extracted.

In a particular embodiment, before step a) of the method for detecting HTF leaks in a solar thermal installation the gas is forced to penetrate into the guiding conduit by the pump.

This step helps to control the amount of air entering the guiding conduit to ensure that if gas is present it will be detected as soon as possible, since it will be introduced forcibly through the holes of guiding conduit.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the disclosure will become clearly understood in view of the detailed description of the disclosure which becomes apparent from a preferred embodiment of the disclosure, given just as an example and not being limited thereto, with reference to the drawings.
- Figure 1A: This figure shows a schematic view of the HTF leak detector device.
- Figure 1B: This figure shows a schematic view of an embodiment of the HTF leak detector device with two receivers.
- Figure 2: This figure shows a schematic view of a thermally insulated component with the HTF leak detector device.
- Figure 3: This figure shows the thermally insulated component of Figure 2 with a pump.
- Figure 4: This figure shows a schematic view of a detailed example of the HTF leak detector.

### DETAILED DESCRIPTION OF THE DISCLOSURE

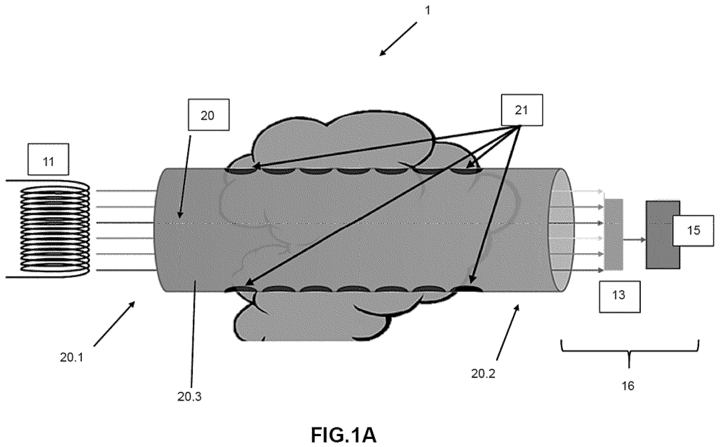

The HTF leak detector device, as shown in Figure 1A, comprises a guiding conduit (20) comprising, a first end (20.1), a second end (20.2) and an outer surface (20.3), and at least one hole (21) configured for a gas to pass through it located on the outer surface (20.3). Further, the HTF leak detector device comprises one modulated IR radiation source (11) located at the first end (20.1) of the guiding conduit (20), configured for emitting modulated IR radiation at least in one wavelength and to inject the modulated IR radiation into the guiding conduit (20), and one receiver (16), comprising at least one optical sensor (14, 15) forming a first reception channel, the at least one optical sensor (14, 15) is located at the second end (20.2) of the guiding conduit (20) for receiving the modulated IR radiation emitted by the at least one modulated IR radiation source (11).

In one embodiment, the guiding conduit (20) comprises a plurality of holes (21) in the outer surface (20.3) configured for receiving a gas generated in a HTF leak.

Again with reference to figure 1A, it can be seen that the gas is inside the guiding conduit (20), so that the modulated IR radiation emitted by the modulated IR radiation source (11) is attenuated at the second end (20.2) of the guiding conduit (20), where it can be seen that the arrows coming out of the second end (20.2) are lighter in colour.

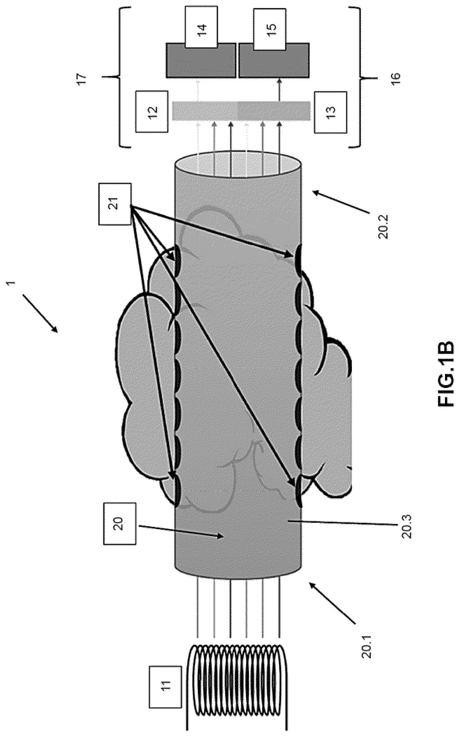

In the embodiment shown in figure 1B, the HTF leak detector device comprises two receivers (16, 17), which receive this attenuated radiation.

Each receiver (16, 17) comprises one optical filter (12, 13) and one optical sensor (14, 15) forming two reception channels.

The optical filter (12, 13) is placed before the optical sensor (14, 15) since it is configured to allow only the desired wavelength to pass through, which is why in Figures 1A it can be seen that of all the radiation rays (arrows) after the optical filter (13) only one passes to the optical sensor (15). The same can be observed in figure 1B with two receivers (16, 17), wherein the optical filter (12, 13) is placed before the optical sensor (14, 15), allowing only the desired wavelength to pass through, which is why in Figure 1B it can be seen that of all the radiation rays (arrows) after the optical filters (12, 13) only one passes to the optical sensors (14, 15).

The radiation that reaches the optical sensors (14, 15) corresponds to the desired wavelength. Then, the optical sensors (14, 15) convert the reached radiation into an electrical signal to be sent to a central system that can determine whether or not the signal corresponds to the presence of gas. As described above, the central system allows continuous monitoring of the status of the installation, so the central system, thanks to the HTF leak detector (1), will be able to detect the HTF leak at a very early stage and raise an alarm for repair.

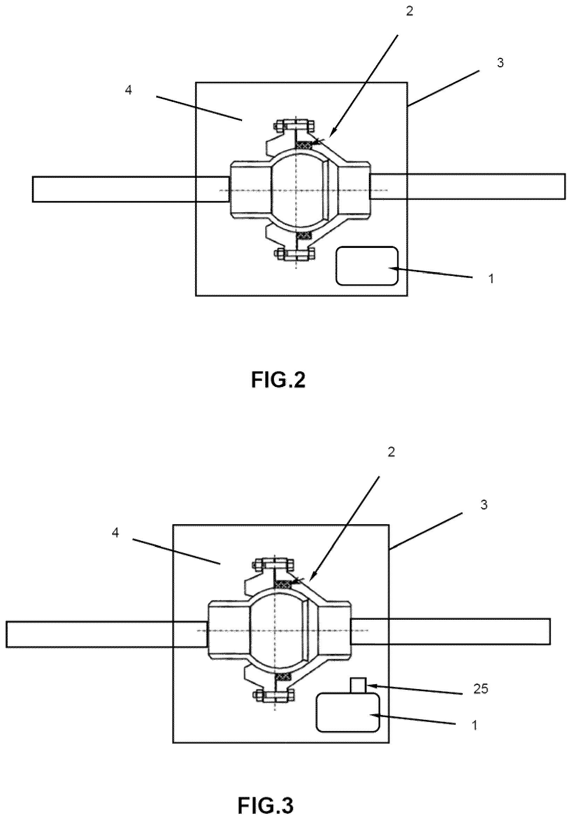

The described HTF leak detector (1) is installed in an insulation chamber (4) of a thermal component (2) of a solar power plant, that is, in the space between an insulation casing (3) and a thermal component (2) or a pipe as can be observed in Figure 2.

Thanks to the placement of the HTF leak detector (1), it is possible to detect leaks at an early stage, since at the moment the component or pipe (2) has a leak, the detector (1) is able to detect it in a fast manner.

Figure 3 shows the embodiment of the Figure 2 when the HTF leak detector (1) further comprises a pump (25) to force the entrance of the gas into the guiding conduit (20) to detect the presence of the gas as early as possible. In this way, no matter how small the leakage, the pump (25) will redirect said gas towards the guiding conduit (20).

### Example

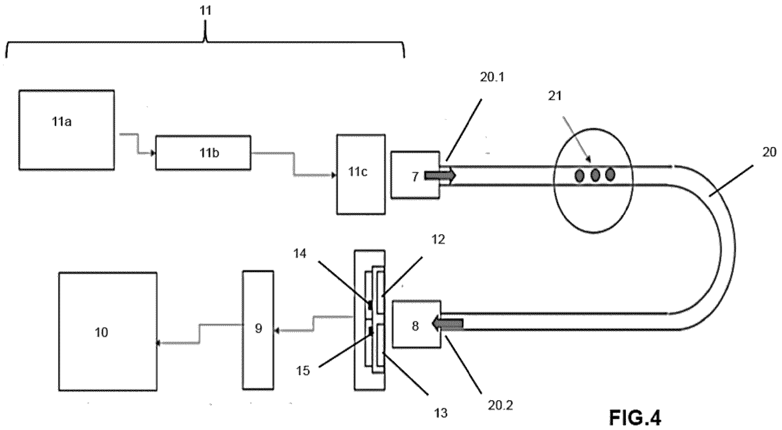

Figure 4 depicts a detailed example of a HTF leak detector device (1), which employs a modulated IR radiation source (11) with an emitting power of 20 mW and an equivalent temperature of 500°C. The modulated IR radiation source (11) comprises a signal generator (11a), a power card (11b) and a thermal source (11c) in order to be able to emit radiation in accordance with a rectangular temporal function at a precisely defined and known frequency (5 Hz in this example). In this manner, the signal to be detected is identified and distinguished from ambient light, which is a continuous signal, and from other light sources and interferences.

The modulated IR radiation source (11) is attached to a coupler (7) configured to help the modulated IR radiation (11) being coupled with the first end (20.1) of the guiding conduit (20).

Figure 4 also shows that the guiding conduit (20) is a curved guiding conduit in order to facilitate the entrance of the gas in it through the plurality of holes (21) located on the outer surface (20.3) of the guiding conduit (20). Specifically, an 8 mm diameter and 100 cm length shiny aluminium tube is employed as guiding conduit (20). The tube has been bent at an angle of 180° so that it can be positioned around the element to be monitored. Near the bending area, a series of six holes (21), each with a diameter of 3mm, have been drilled through the tube (20).

In the second end (20.2) of the guiding conduit (20) there is another coupler (8) attached to the receivers (16, 17).

In this example, the receivers (16, 17) comprise two thermopile optical detectors (14, 15) and optical filters (12, 13). The two thermopile optical detectors have been selected for use as detectors, as they have a low response time of about 15 ms and are capable of detecting a wide range of wavelengths between 6 µm and 14 µm. That range is further limited by means of optical filters to the absorption band of the gas of interest. In the case of the gas employed in this example, two filters were utilized (12, 13), each with a width of 500 nm and centered at 8 µm and 10 µm, respectively.

The two receivers (16, 17) form two selected channels corresponding respectively to an absorption channel of the test gas and another channel where the gas does not interact, which will be used as a reference or calibration signal.

Finally, the receivers (16, 17) are connected to a DAQ acquisition card (9) that digitizes the detected, and eventually amplified signals, and transmits them to a computer (10).

In this example, in the detection stage, a computer (10) processes the signal with a lock-in amplification algorithm to filter the detected signal, filtering out ambient light, filtering out noise, eliminating the influence of the continuous signal and other frequencies while amplifying the desired signal, and ensuring thereby that the measured signal corresponds only to the part of the signal that reaches the optical detector that is related to the one emitted by the modulated IR radiation source (11).

Finally, the ratio between the two signals (test and calibration or reference) is calculated and when the ratio between the test signal and the calibration or reference signal exceeds a threshold level it is determined that the thermally insulated component leaks HTF.

## Claims

1. A HTF leak detector device (1) for solar thermal installations comprising:
- a guiding conduit (20) comprising,
a first end (20.1), a second end (20.2) and an outer surface (20.3), and
at least one hole (21) configured for a gas to pass through it located on the outer surface (20.3),
- at least one modulated IR radiation source (11) located at the first end (20.1) of the guiding conduit (20), configured for emitting modulated IR radiation at least in one wavelength and to inject the modulated IR radiation into the guiding conduit (20),
- at least one receiver (16), comprising at least one optical sensor (14, 15) forming a first reception channel, the at least one optical sensor (14, 15) is located at the second end (20.2) of the guiding conduit (20) for receiving the modulated IR radiation emitted by the at least one modulated IR radiation source (11).

2. The HTF leak detector device (1) for solar thermal installations, according to any of the preceding claims, wherein the first reception channel comprises at least one optical filter (12, 13) located before the optical sensor (14,15) and being configured for filtering a predetermined wavelength of the IR radiation.

3. The HTF leak detector device (1) for solar thermal installations, according to any of the preceding claims, wherein the at least one hole (21) of the guiding conduit (20) is circular or a slot.

4. The HTF leak detector device (1) for solar thermal installations, according to any of the preceding claims, wherein the HTF leak detector device (1) comprises at least one second receiver (17), comprising at least an assembly of one optical filter (12, 13) and an optical sensor (14, 15) forming a second reception channel, wherein the optical filter (12, 13) is configured with a reference wavelength.

5. The HTF leak detector device (1) for solar thermal installations, according to any of the preceding claims, wherein the HTF leak detector device (1) comprises a demodulator (10) configured to demodulate the modulated IR radiation and extract only the information of the modulated IR radiation at the desired wavelength that can pass through the guiding conduit (20) from the at least one modulated IR radiation source (11) to the at least one receiver (16), preferably the demodulator is a lock-in amplifier.

6. The HTF leak detector device (1) for solar thermal installations, according to any of the preceding claims, wherein the HTF leak detector device (1) comprises an electronic circuitry comprising processing and data transmission means.

7. The HTF leak detector device (1) for solar thermal installations, according to any of the preceding claims, further comprising a pump (25) configured to force penetration of gas into the guiding conduit (20) through the at least one hole (21) of the guiding conduit (20).

8. A thermally insulated component (2) for a solar thermal installation comprising:
- a thermal insulation casing (3) arranged around the component (2) forming an insulation chamber (4) between the component (2) and the thermal insulation casing (3), and
- at least a HTF leak detector device (1) according to any of claims 1 to 7, located inside the insulation chamber (4).

9. A solar thermal installation comprising at least one thermally insulated component (2) according to claim 8.

10. Method for detecting HTF leaks in a solar thermal installation according to claim 9, wherein the method comprises the following steps:
a) emitting modulated IR radiation at a given wavelength or range of wavelengths by the modulated IR radiation source (11),
b) passing the modulated IR radiation through the guiding conduit (20),
c) receiving the modulated IR radiation by the at least one receiver (16) via the optical sensor (15), producing a test signal which wavelength correspond to the one that is affected by the presence of the gas in the guiding conduit (20),
d) determine that there is HTF leakage in the thermal insulation casing (3) of the thermally insulated component (2), when the ratio between the test signal and a reference or calibration signal vary and exceeds a threshold level.

11. Method for detecting HTF leaks in a solar thermal installation according to claim 10, wherein before step a) the method comprises the following steps:
i) emitting modulated IR radiation at a given wavelength or range of wavelengths by the modulated IR radiation source (11),
ii) passing the modulated IR radiation through the guiding conduit (20),
iii) receiving the modulated IR radiation by the at least one receiver (17) via the optical sensor (14), producing a calibration or reference signal which wavelength correspond to the one that is not affected by the presence of the gas in the guiding conduit (20),
iv) storing the calibration or reference signal

12. Method for detecting HTF leaks in a solar thermal installation according to any of claims 10 and 11, wherein in steps c) and iii) the modulated IR radiation received by the at least one receiver (16, 17) is received by the optical sensor (14, 15), via optical filters (12, 13).

13. Method for detecting HTF leaks in a solar thermal installation according to claims 10, wherein in step c) the received modulated IR radiation is demodulated by the demodulator (10) to extract only the information of the modulated IR radiation at the desired wavelength.

14. Method for detecting HTF leaks in a solar thermal installation according to any of claims 10-13, wherein before step a) gas is forced to penetrate into the guiding conduit (20) by the pump (25).
